# EUROPEAN PATENT APPLICATION

(11) **EP 2 998 944 A1**
(43) Date of publication of application: **23.03.2016**
(21) Application number: 15185201.9
(22) Date of filing: 15.09.2015
(51) Int. Cl.: G07G 1/00, G06Q 20/18

(54) **CASH RECEIVING TRAY AND COMMODITY SALES DATA PROCESSING UNIT WITH THE SAME**

(30) Priority: 18.09.2014 JP 2014189976
(71) Applicant: Toshiba TEC Kabushiki Kaisha, Tokyo 141-0032 (JP)
(72) Inventor: MATSUMURA, Kazuyuki, Shinagawa-ku, Tokyo 141-0032 (JP); NAKAYAMA, Tadashi, Shinagawa-ku, Tokyo 141-0032 (JP); SEI, Tomohiro, Shinagawa-ku, Tokyo 141-0032 (JP); ENOMOTO, Hideki, Shinagawa-ku, Tokyo 141-0032 (JP)
(74) Representative: Takeuchi, Maya

(57) **Abstract**

According to one embodiment, a cash receiving tray includes a placing part on which money used for cash settlement in a commodity sales processing and a medium used for electronic settlement in the commodity sales processing are placed, and a medium processing device arranged to face the placing part to perform a settlement processing of the medium placed on the placing part.

## Description

### FIELD

Embodiments described herein relate generally to a cash receiving tray and a commodity sales data processing unit with the cash receiving tray.

### BACKGROUND

When settlement is performed with a commodity sales processing in a retail store or the like, there are a case in which a customer pays in cash and a case in which the customer desires to perform settlement using a non-contact type IC card storing a monetary value. When the customer pays in cash, the customer places cash on a cash receiving tray provided near a POS (Point Of Sales) terminal which performs the commodity sales processing. A casher receives the placed cash.

On the other hand, when the customer desires to perform the settlement using the IC card, the customer places the IC card on a dedicated placing table provided near the POS terminal. A card settlement device installed near the POS terminal communicates with the IC card to perform the settlement processing.

As described above, a space for installing both the cash receiving tray for cash and the placing table for IC card is required near the POS terminal.

### DESCRIPTION OF THE DRAWINGS

FIG. 1 is a perspective view illustrating a whole checkout system according to an embodiment;
FIG. 2 is a perspective view illustrating an outer appearance of a POS terminal unit;
FIG. 3 is a perspective view exemplifying an attachment structure of a display for customer and a cash receiving tray;
FIGS. 4A to 4C illustrate swivel rotation of the display for customer and the cash receiving tray, in which FIG. 4A is a view illustrating the display for customer and the cash receiving tray at a regular position, FIG. 4B is a view illustrating the display for customer and the cash receiving tray at a clockwise position, and FIG. 4C is a view illustrating the display for customer and the cash receiving tray at a counterclockwise position;
FIG. 5 is a front view schematically illustrating the attachment structure of the display for customer and the cash receiving tray;
FIG. 6 is a block diagram illustrating a hardware configuration of a POS terminal; and
FIGS. 7A to 7D illustrate display examples of the display for customer, in which FIG. 7A is a view illustrating a display screen of commodity information and the total amount, FIG. 7B is a view illustrating a card selection screen, and FIGS. 7C and 7D are views illustrating operation instruction screens.

### DETAILED DESCRIPTION

According to one embodiment, a cash receiving tray includes a placing part on which money used for cash settlement in a commodity sales processing and a medium used for electronic settlement in the commodity sales processing are placed, and a medium processing device arranged to face the placing part to perform a settlement process of the medium placed on the placing part.

Preferably, the tray according further comprises a display device of which a display surface is directed to a customer arranged at a position continuous with the placing part to display information relating to the commodity sales processing and information relating to the cash settlement or electronic settlement.

Preferably, the display device includes a touch panel with a display surface on which an input operation is performed.

Preferably, the tray according further comprises a swivel mechanism for performing swivel adjustment of the display device.

According to another embodiment, a commodity sales data processing unit includes a commodity sales data processing device which performs a commodity sales data processing, and the above-mentioned cash receiving tray arranged near the commodity sales data processing device.

The above and other objects, features and advantages of the present invention will be made apparent from the following description of the preferred embodiments, given as non-limiting examples, with reference to the accompanying drawings.

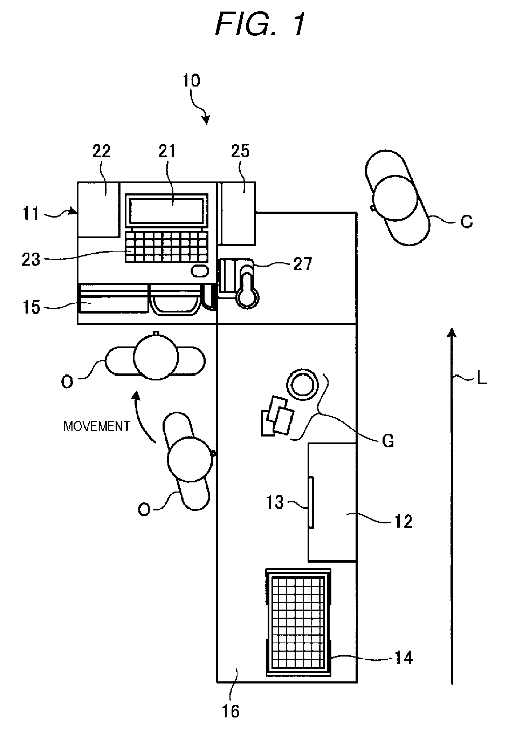

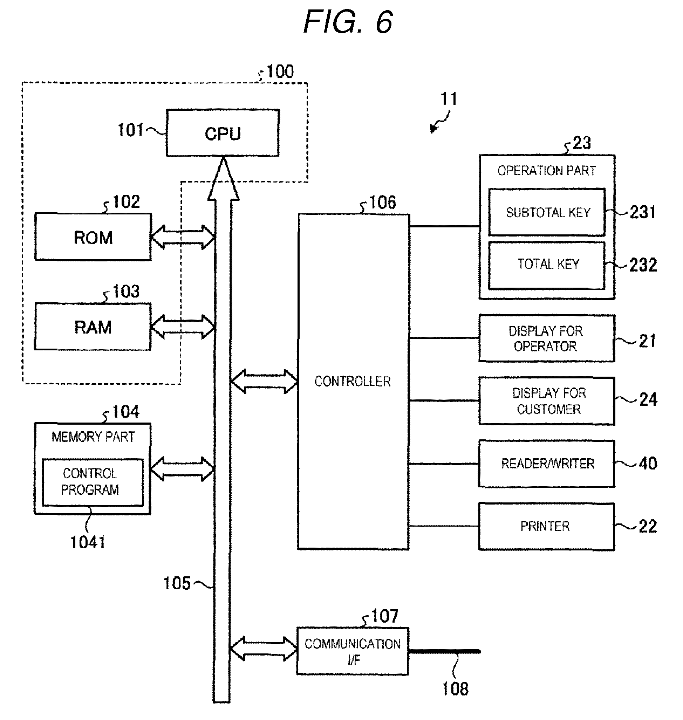

FIG. 1 is a perspective view illustrating a whole checkout system 10 of an embodiment. The checkout system 10 acting as a commodity sales data processing system includes a POS (Point Of Sales) terminal 11, a commodity data input terminal device 12 and a change machine unit 15. The POS terminal 11 performs a commodity sales process for selling a commodity and a settlement process of the sold commodity. The commodity data input terminal device 12 is connected to the POS terminal 11 through a communication line 108 (see FIG. 6) . The commodity data input terminal device 12 includes a barcode scanner 13 to read a barcode serving as a code symbol. The commodity data input terminal device 12 is arranged in an upright manner on a register table 16 having a laterally long table shape on which a shopping basket 14 is placed.

A checkout operation of the checkout system 10 by one-person is described. A customer C lined in checkout lane puts the shopping basket 14 having a commodity G therein on the register table 16. The customer C moves in a direction L as a flow direction of sales operation of the commodity G.

On the other hand, an operator O (store clerk) takes out the commodity G from the shopping basket 14 to read barcode attached to the commodity G through the barcode scanner 13. When reading of all the commodities is completed, the operator O makes a settlement instruction from the commodity data input terminal device 12. When the settlement instruction is made, the commodity data input terminal device 12 notifies the POS terminal 11 of the read commodity code and the settlement instruction. Thereafter, the operator O moves from an operation position of the commodity data input terminal device 12 to an operation position of the POS terminal 11.

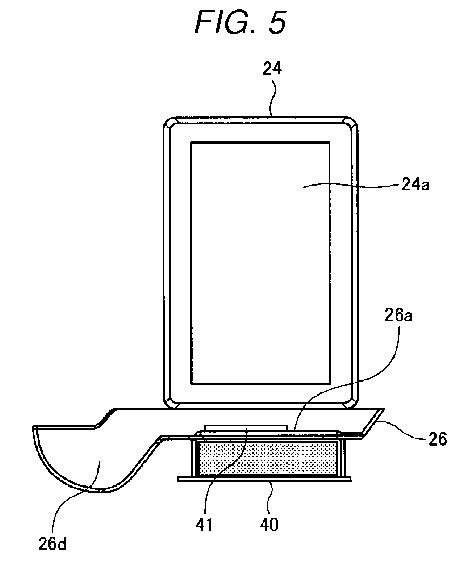

Next, if the customer desires payment in cash (cash settlement), the operator O inputs the amount of cash received from the customer C to the POS terminal 11. The POS terminal 11 instructs the change machine unit 15 to pay change if the change is required, and issues a receipt and then ends the settlement processing. If the customer C desires payment using, for example, an IC card, a portable terminal and the like (electronic settlement) which deals with electronic money information as a monetary value, the settlement processing is performed using a reader/writer acting as a medium reading device. Incidentally, the IC card, the portable terminal and the like which deal with the electronic money information are generally called as a "medium". The medium includes a prepaid type in which electronic money is previously stored and a post-paid type in which electronic money is not stored, and both are used for the electronic settlement. In the embodiment, the description is made while using a prepaid type IC card as an example of the medium. Incidentally, the IC card is called "card". In the embodiment, a card 41 (see FIG. 5) is used.

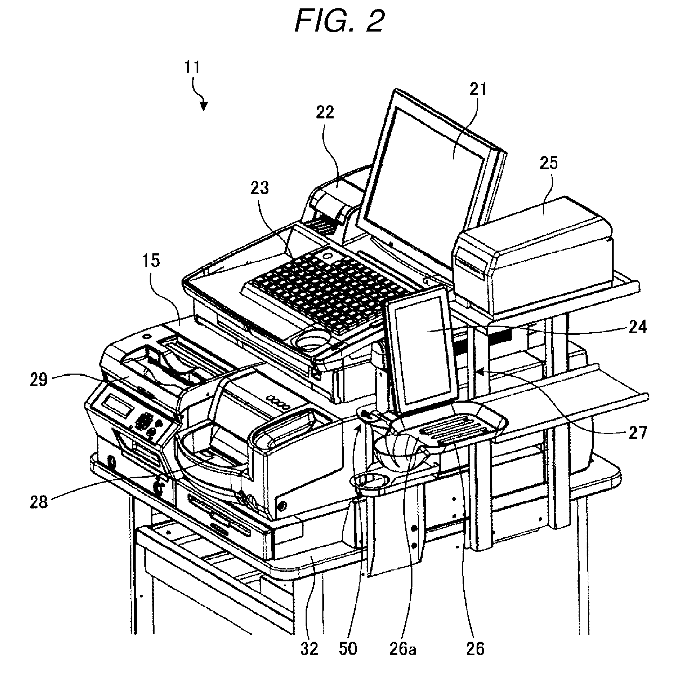

FIG. 2 is a perspective view illustrating an outer appearance of the POS terminal 11. As shown in FIG. 2, the POS terminal 11 includes a display for operator 21 such as a liquid crystal display provided with a touch panel on an upper surface. Besides, the POS terminal 11 includes a printer 22 such as a thermal printer, and an operation part 23 such as a keyboard. Besides, the POS terminal 11 is connected also to a coupon printer 25 which issues a coupon.

Further, a display for customer 24 and a cash receiving tray 26 are provided near the POS terminal 11. The display for customer 24 is a rectangular display device to display various information (commodity price, the total amount of payment, etc.) relating to the settlement for the customer C who requests checkout at the right side of the lane in FIG. 1. The cash receiving tray 26 is a tray on which cash or a card is temporarily placed at the time of settlement.

Incidentally, the change machine unit 15 is provided below the POS terminal 11. The change machine unit 15 inputs the amount of money paid by the customer C to the POS terminal 11, and discharges change according to the instruction from the POS terminal 11. The change machine unit 15 includes a coin receiving/discharging part 28 and a bill receiving/discharging part 29. The operator O puts the money (coin) placed on the cash receiving tray 26 by the customer into the coin receiving/discharging part 28 and the bill receiving/discharging part 29. Besides, the operator O places the money discharged to the coin receiving/discharging part 28 and the bill receiving/discharging part 29 onto the cash receiving tray 26.

The POS terminal 11 and the change machine unit 15 are placed on a top plate of a rack 32 (register table).

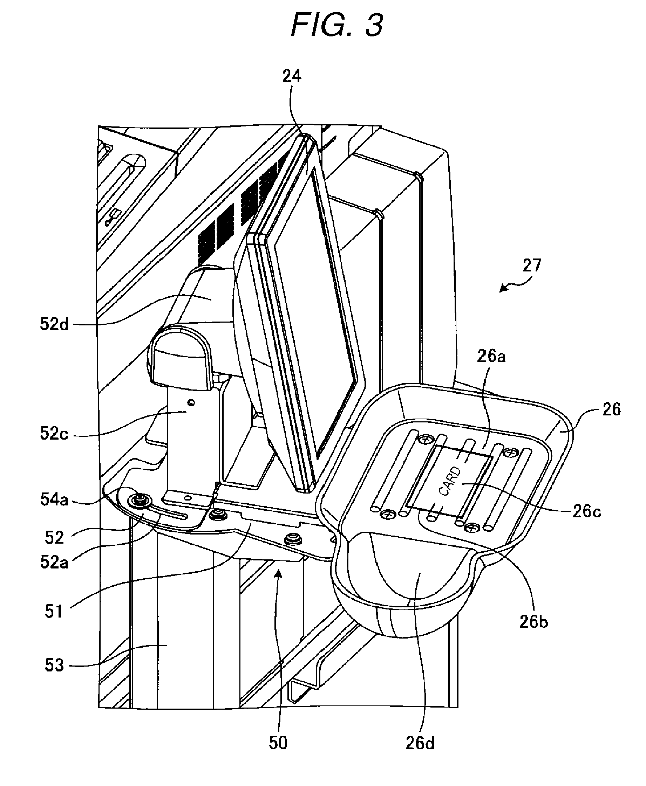

Next, the structure of the display for customer 24, the cash receiving tray 26 and a reader/writer 40 arranged at the POS terminal 11 are described in detail with reference to FIG. 3 to FIG. 5.

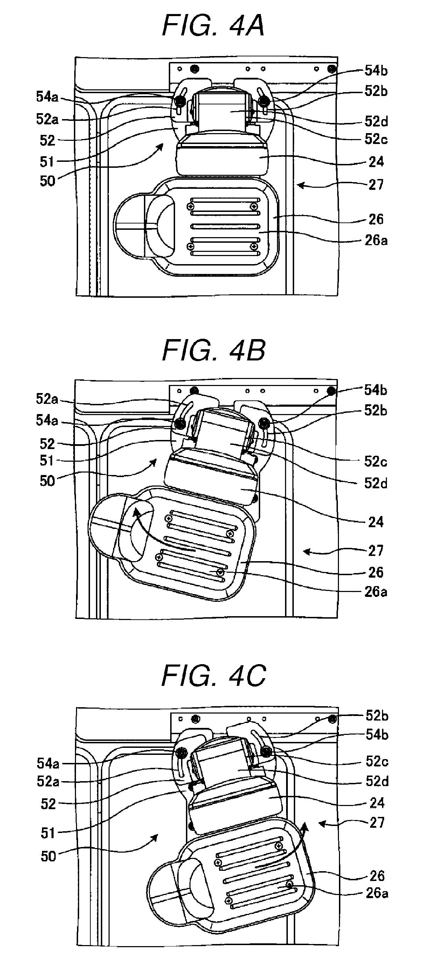

FIG. 3 is a perspective view exemplifying an attachment structure of the display for customer 24 and the cash receiving tray 26. FIGS. 4A to 4C show swivel rotation of the display for customer 24 and the cash receiving tray 26, in which FIG. 4A is a view illustrating the display for customer 24 and the cash receiving tray 26 at a regular position, FIG. 4B is a view illustrating the display for customer 24 and the cash receiving tray 26 at a clockwise position, and FIG. 4C is a view illustrating the display for customer 24 and the cash receiving tray 26 at a counterclockwise position. In FIG. 3, the display for customer 24 and the cash receiving tray 26 is equipped with a swivel mechanism 50 for performing a swivel adjustment of the display surface of the display for customer 24. The swivel adjustment is to perform an angle adjustment of the direction of the display surface of the display for customer 24 to right or left direction. The swivel mechanism 50, the display for customer 24 and the cash receiving tray 26 mainly constitute a money transfer unit 27. The money transfer unit 27 and the POS terminal 11 constitute a commodity sales data processing unit.

The display for customer 24 is substantially rectangular in shape. The display for customer 24 includes a display surface 24a. A touch panel (not shown) is provided on the display surface 24a. The display for customer 24 and the cash receiving tray 26 are fixedly provided on a rotation member 52.

The swivel mechanism 50 includes a base member 51, the rotation member 52 and a support member 53. One of the ends of the support member 53 is fixed to the top plate of the rack 32. The base member 51 in a flat-plate shape is attached to the other end of the support member 53. On the other hand, the rotation member 52 in a flat-plate shape is fixed to the base member 51 with screws 54a and 54b.

A fixing member 52c to fix the display for customer 24 is provided in an upright manner on the rotation member 52. The fixing member 52c includes a hinge 52d as a rotation furculum, and holds the display for customer 24 rotatably in a tilt direction (up-and-down direction) with the hinge 52d.

Incidentally, the hinge 52d of the fixing member 52c allows the rectangular display for customer 24 to be selectively arranged in a horizontal placement or in a vertical placement when viewed from the customer C. The vertical placement is defined to be a placement state in which the vertical length is longer than the horizontal length. The horizontal placement is defined to be a placement state in which the horizontal length is longer than the vertical length.

The cash receiving tray 26 is provided on the rotation member 52 at a position where the tray 26 is not interfered by the display for customer 24 provided on the fixing member 52c. However, the cash receiving tray 26 and the display for customer 24 are desirably installed each other as close as possible in order to give a sense of unity. The display surface 24a of the display for customer 24 is arranged to be continuous with a placing part 26a of the cash receiving tray 26, and extends vertically from the cash receiving tray 26. Therefore, the cash receiving tray 26 becomes closer to the customer C. This is a layout in which the customer C can easily confirm information relating to the settlement (amount of payment) which is displayed on the display for customer 24 when the customer C puts money on the cash receiving tray 26 for the settlement.

Although it is not illustrated, the base member 51 is provided with a pair of screw holes to receive the screws 54a and 54b at positions facing each other across the fixing member 52c of the rotation member 52. On the other hand, the rotation member 52 is provided with a long hole 52a and 52b along the swivel direction of the display for customer 24 and the cash receiving tray 26. The long hole 52a and 52b are formed on the circumference whose diameter is a line connecting the pair of screw holes provided on the base member 51. The screws 54a and 54b respectively inserted in the long holes 52a and 52b rotatably hold the rotation member 52 along the long holes 52a and 52b. The screws 54a and 54b are fixed to the pair of screw holes of the base member 51 in the long holes 52a and 52b.

With the above arrangement, the display for customer 24 and the cash receiving tray 26 can be integrally rotated in the swivel direction by the swivel mechanism 50 within the range of the long holes 52a and 52b. In order to lead the customer C to a position confronting the display for customer 24 and the cash receiving tray 26, the display for customer 24 and the cash receiving tray 26 are fixed at a position shown in FIG. 4A. In order to lead the customer C to face to a downstream side, the display for customer 24 and the cash receiving tray 26 are swiveled in the clockwise direction shown in FIG. 4B from the confronting position. In order to lead the customer C to face to an upstream side, the display for customer 24 and the cash receiving tray 26 are swiveled in the counterclockwise direction shown in FIG. 4C from the confronting position.

According to the embodiment, the display for customer 24 and the cash receiving tray 26 can be integrally swiveled by the swivel mechanism 50 to adjust its position. Accordingly, in the embodiment, keeping the compact structure, the display surface 24a of the customer display 24 can be adjusted to a layout in which the customer can easily look at the display surface 24a. Besides, in the embodiment, the operability of the customer with respect to the cash receiving tray 26 can also be adjusted.

Besides, as shown in FIG. 3 and FIG. 5, the cash receiving tray 26 is provided with the placing part 26a and a cash receiving part 26d. In the placing part 26a, several rod-like parts are formed on a flat plain part. The cash receiving part 26d is formed to be continuous with the placing part 26a. The cash receiving part 26d is formed in a substantially hemisphere shape downward from the placing part 26a.

Besides, the placing part 26a is also a card placing part on which the card 41 is placed. A substantially square figure 26b visually indicating a position where the card 41 is to be placed is provided on the placing part 26a. In the figure 26b, a character "card" 26c is printed, for example. The figure 26b is a mark which guides the customer C to place the card 41 at the correct position of the placing part 26a. The customer C places the card 41 in accordance with the figure 26b. Incidentally, the cash receiving tray 26 is formed of a material (for example, resin) other than metal such as iron.

Besides, the reader/writer 40 that electrically reads electronic money information stored in the card 41 is installed below the cash receiving tray 26. The reader/writer 40 is provided at a position below the cash receiving plate 26 and substantially facing the figure 26b of the placing part 26a to contact the rear side of the cash receiving tray 26 from below.

The reader/writer 40 reads the electronic money information stored in the card 41 placed on the placing part 26a with a well-known NFC (Near Field Communication) communication technique. Besides, the reader/writer 40 writes electronic money information into the card 41 placed on the placing part 26a with the NFC communication technique. In the embodiment, the reader/writer 40 reads the electronic money information stored in the card 41 according to the settlement processing. The reader/writer 40 subtracts the settlement amount from the read electronic money information, and writes the electronic money information of the balance into the card 41. Besides, if charge amount information is inputted from the POS terminal 11, the reader/writer 40 writes the electronic money information of the charge amount into the card 41.

Incidentally, the reader/writer 40 may not contact the cash receiving tray 26. In this case, the reader/writer 40 is installed at a position substantially facing the figure 26b of the placing part 26a and separated from the cash receiving plate 26 by a specified distance (for example, several(mm)). In brief, it is preferable that the reader/writer 40 is installed at a distance through which the NFC communication is established with the card 41 placed on the placing part 26a. Besides, at least a part of the cash receiving tray 26 near the placing part 26a is desirably transparent. Because of the cash receiving tray 26 that is transparent, the customer C can confirm the position of the installed reader/writer 40 through the cash receiving tray 26. Thus, even if the figure 26b is not formed, the customer C can place the card 41 at the correct position.

If the customer C pays in cash for the settlement, the customer C places cash on the placing part 26a of the cash receiving tray 26. Then, the operator O moves the cash placed on the placing part 26a with fingers or the like to the cash receiving part 26d and grabs the cash. The operator O inserts the grabbed cash into the coin receiving/discharging part 28 and the bill receiving/discharging part 29. Besides, the operator O places cash discharged as a change on the placing part 26a. The customer C moves the cash placed on the placing part 26a to the cash receiving part 26d with fingers or the like and grabs the cash.

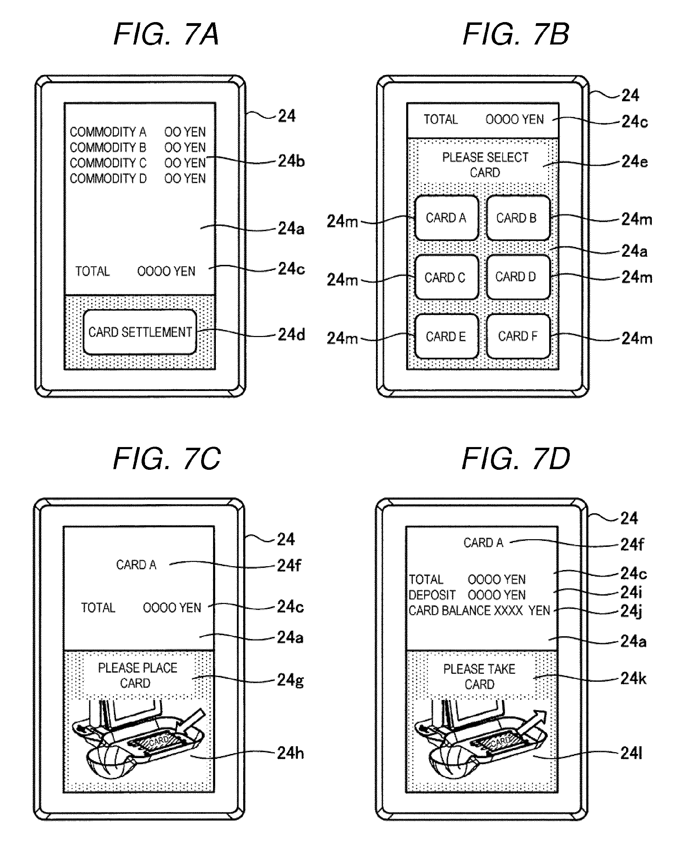

On the other hand, if the customer C desires payment with the card 41 for the settlement, the customer C notifies the operator O of the payment with the card 41, and places the card 41 on the placing part 26a. At this time, the customer C places the card 41 while seeing the figure 26b as the mark. Then, the POS terminal 11 controls the reader/writer 40 to carry out the settlement processing with the card 41 placed on the placing part 26a. At this time, the display for customer 24 displays a screen for guiding the operation of the customer C (see FIG. 7).

Next, the hardware of the POS terminal 11 is described with reference to the block diagram of FIG. 6. In FIG. 6, the POS terminal 11 includes a CPU (Central Processing Unit) 101, a ROM (Read Only Memory) 102, a RAM (Random Access Memory) 103, a memory part 104 and the like. The CPU 101 is a control entity. The ROM 102 stores various programs. The RAM 103 expands various data. The memory part 104 stores various programs. The CPU 101, the ROM 102, the RAM 103 and the memory part 104 are connected to each other through a data bus 105. The CPU 101, the ROM 102 and the RAM 103 constitutes a control part 100. The CPU 101 operates in accordance with a control program 1041 which is stored in the ROM 102 or the memory part 104 and expanded in the RAM 103. The CPU 101 operates in this way, and the control part 100 performs a control processing described later.

The memory part 104 is constructed with a nonvolatile memory, such as an HDD (Hard Disc Drive) or a flash memory, in which memory information is kept even if the power is turned off. The memory part 104 stores programs including the control program 1041.

The data bus 105 connects the operation part 23, the display for operator 21, the display for customer 24, the reader/writer 20 and the printer 22 through a controller 106.

The operation part 23 includes a subtotal key 231, a total key 232, and various keys including numeric keys and function keys. The subtotal key 231 is used to declare the end of one transaction. The total key 232 is used to perform a settlement processing with cash for a transaction.

The display for operator 21 is installed so that the display, and dis surface is directed to the operator such as a shop clerk to display information to the operator. The display for customer 24 is installed so that the display surface 24a is directed to the customer to display information to the customer.

The reader/writer 40 uses the NFC communication technique to communicate with the card 41 placed on the placing part 26a of the cash receiving tray 26.

The printer 22 is, for example, a thermal printer having a thermal transfer print head. The printer 22 stores a rolled receipt paper in the main body of the POS terminal 11. The printer 22 draws out the receipt paper, and prints commodity information and settlement information with the thermal transfer print head to issue the receipt.

Besides, the data bus 105 connects a communication I/F (Interface) 107 electrically connected to the communication line 108 installed in the shop. The communication I/F 107 is connected to the commodity data input terminal device 12 through the communication line 108.

Next, transition of display by the display for customer 24 is described with reference to FIGS. 7A to 7D, while the flow of a control processing performed by the control part 100 of the POS terminal 11 is described.

The operator O carries out the commodity sales processing for all commodities in the POS terminal 11, and then operates the subtotal key 231 of the operation part 23. Then, the control part 100 of the POS terminal 11 displays a screen shown in FIG. 7A on the display for customer 24a. That is, the control part 100 displays commodity information (commodity names and amounts of money) 24b of the commodities subjected to the commodity sales processing on the display surface 24a of the display for customer 24. Besides, the control part 100 also displays a total amount 24c of the commodities subjected to the commodity sales processing on the display for customer 24a. Besides, the control part 100 displays a card settlement button 24d which is operated by the customer C who desires settlement with the card 41.

If the customer C places cash on the placing part 26a, the operator O determines that cash settlement is desired. The operator O inputs the amount of the received cash through the operation part 23, and operates the total key 232 of the operation part 23. Then, the control part 100 performs the cash settlement processing. The control part 100 prints the commodity information of the commodities subjected to the commodity sales processing and the settlement information through the printer 22 to issue a receipt. The control part 100 ends the settlement processing.

On the other hand, if the customer C desires payment with card, the customer touches the touch panel of the display surface 24a and operates the card settlement button 24d. Then, the control part 100 displays cards available in the shop on the display for customer 24 as shown in FIG. 7B. That is, in FIG. 7B, the control part 100 displays the total amount 24c of the commodities subjected to the commodity sales processing on the display for customer 24. Besides, the control part 100 displays a plurality of cards 24m (six different cards: card A to card F in Fig. 7B) available in the settlement. Besides, the control part 100 displays a message 24e ("Please select a card") for guiding the customer C of the operation that one of the displayed cards is selected.

The customer C selects one of the cards displayed, and touches the card on the touch panel of the display surface 24a. In the embodiment, the card A is selected. Then, the control part 100 displays the selected card 24f in a character form as shown in FIG. 7C. Besides, the control part 100 also displays the total amount 24c of the commodities subjected to the commodity sales processing. Further, the control part 100 displays a message 24g for instructing the customer to place the card on the placing part 26a and an explanation view 24h. In the embodiment, the control part displays the message 24g of "Please place the card". Besides, in the embodiment, as the explanation view 24h, the figure in which the card is placed on the placing part 26a is displayed.

The customer C places the selected card A on the placing part 26a of the cash receiving tray 26 in accordance with the explanation of the message 24g and the display of the explanation view 24h. Then, the control part 100 controls the reader/writer 40 to read electronic money information from the card 41 placed on the placing part 26a. Next, the control part 100 subtracts the settlement amount from the read electronic money information. Next, the control part 100 controls the reader/writer 40, to write the electronic money information of the subtracted result into the card 41.

The control part 100 displays the settlement result as shown in FIG. 7D. That is, the control part 100 displays the selected card 24f. The control part 100 displays the total amount 24c of the commodities subjected to the commodity sales processing. The control part 100 displays electronic money information 24i read from the card 41 by controlling the reader/writer 40. Further, the control part 100 displays electronic money information 24j written in the card 41. Besides, the control part 100 displays a message 24k for instructing the customer to remove the card 41 from the placing part 26a and an explanation view 241. In the embodiment, the control part 100 displays the message 24k of "Please take the card". Besides, in the embodiment, as the explanation view 241, the figure in which the card is removed from the placing part 26a is displayed.

In the embodiment as described above, if the customer C desires the cash settlement, the customer C places settlement amount in cash on the placing part 26a of the cash receiving tray 26. Then, the control part 100 performs the cash settlement processing. On the other hand, if the customer C desires the card settlement, the customer C places the card 41 on the placing part 26a of the cash receiving tray 26. Then, the control part 100 performs the settlement processing using the card 41. Thus, the cash payment and the payment using the card 41 are possible even if a cash receiving tray for cash and a placing table for the card 41 are not provided near the POS terminal 11.

Beside, the display for customer 24 and the placing part 26a of the cash receiving tray 26 are continuously arranged or integrally arranged, and the display surface 24a of the display for customer 24 is vertically extended from the cash receiving tray 26. Thus, information displayed on the display for customer 24 is not concealed by the cash or the card 41 placed on the placing part 26a. Besides, the customer C can see the display displayed on the display for customer 24 and the cash or the card 41 placed on the placing part 26a within the same field of view. Thus, the customer C can place the cash or the card 41 while seeing the total amount of payment displayed on the display for customer 24. In this way, an extra or additional load is not applied to the operation of the customer, the stress of the customer is reduced, and the time taken for accounting is shortened.

Further, although the touch panel is provided on the display surface 24a, the operation of the touch panel is not disturbed by the cash or the card 41 placed on the placing part 26a.

Besides, since the display for customer 24 and the cash receiving tray 26 are integrally rotated, even if the swivel mechanism 50 is added, all the structure including the swivel mechanism 50 can be made compact. Thus, the above-described effects can be provided without destroying the layout relation between the display for customer 24 and the cash receiving tray 26. Besides, increase in cost by the addition of the swivel mechanism 50 can be minimized.

Although embodiments have been described, these embodiments have been presented by way of example only, and are not intended to limit the scope of the invention. Indeed, these novel embodiments can be carried out in a variety of other forms, and various omissions, substitutions and changes can be made within the scope not departing from the framework of the invention. These embodiments and modifications thereof fall within the scope of the invention and fall within the scope of the invention recited in the claims and their equivalents.

For example, in the embodiment, although the description is made while using the IC card ("card" in the embodiment) as an example of the medium, the medium may be another medium such as a portable terminal in which electronic money information is stored.

## Claims

1. A cash receiving tray comprising:
a placing part on which money used for cash settlement in a commodity sales processing and a medium used for electronic settlement in the commodity sales processing are to be placed; and
a medium processing device arranged to face the placing part and to perform a settlement processing of the medium placed on the placing part.

2. The tray according to claim 1, further comprising a display device of which a display surface is directed to a customer arranged at a position continuous with the placing part to display information relating to the commodity sales processing and information relating to the cash settlement or electronic settlement.

3. The tray according to claim 2, wherein the display device includes a touch panel with a display surface on which an input operation is performed.

4. The tray according to claim 2 or 3, further comprising a swivel mechanism for performing swivel adjustment of the display device.

5. A commodity sales data processing unit comprising:
a commodity sales data processing apparatus which performs a commodity sales data processing; and
a cash receiving tray, according to any one of claims 1 to 4, that is arranged near the commodity sales data processing device.
